Europäisches Patentamt

European Patent Office

Office européen des brevets

(11) Veröffentlichungsnummer: **0 436 778 A2**

## (12) EUROPÄISCHE PATENTANMELDUNG

(21) Anmeldenummer: 90115979.8

(22) Anmeldetag: 21.08.90

(51) Int. Cl.5: **H02H 11/00**

(30) Priorität: **11.01.90 DE 4000637**

(43) Veröffentlichungstag der Anmeldung:
**17.07.91 Patentblatt 91/29**

(84) Benannte Vertragsstaaten:
**DE FR GB IT SE**

(71) Anmelder: **VDO Adolf Schindling AG**
**Gräfstrasse 103**
**W-6000 Frankfurt/Main 90(DE)**

(72) Erfinder: **Schröder, Hans-Joachim**
**Am Wolfsfeld 9**
**W-6200 Wiesbaden(DE)**

(74) Vertreter: **Klein, Thomas, Dipl.-Ing. (FH)**
**Sodener Strasse 9 Postfach 6140**
**W-6231 Schwalbach a. Ts.(DE)**

(54) **Schaltungsanordnung zum Schutz eines Verbrauchers.**

(57) Bei einer Schaltungsanordnung zum Schutz eines Verbrauchers in einem Gleichspannungsnetz gegen Falschpolung ist in Reihe mit dem Verbraucher die Drain-Source-Strecke eines mit einer Substratdiode versehenen invers betriebenen Feldeffekttransistors geschaltet, wobei die Source-Elektrode mit dem Verbraucher verbunden und die Gate-Elektrode an den von der Source-Elektrode abgewandten Anschluß des Verbrauchers angeschlossen ist.

Fig. 1

EP 0 436 778 A2

## SCHALTUNGSANORDNUNG ZUM SCHUTZ EINES VERBRAUCHERS

Die Erfindung betrifft eine Schaltungsanordnung zum Schutz eines Verbrauchers in einem Gleichspannungsnetz gegen Falschpolung.

Bei Verbrauchern, die elektronische Schaltungen enthalten, ist in der Regel eine vorgesehene Polung bei dem Anschluß an die Spannungsversorgung erforderlich. Insbesondere bei derartigen Verbrauchern in Kraftfahrzeugnetzen sind deshalb entsprechende Schutzschaltungen bekanntgeworden. Am einfachsten ist die Reihenschaltung einer Verpolungsschutzdiode mit dem Verbraucher. Bei größeren Strömen ist jedoch auch die Verlustleistung in der Verpolschutzdiode entsprechend hoch, so daß häufig bei Verbrauchern mit größerem Stromverbrauch Relais eingesetzt werden. Diese verursachen zwar keinen Spannungsabfall im Lastkreis, benötigen jedoch eine Leistung zur Ansteuerung. Aufgabe der vorliegenden Erfindung ist es, eine Schaltungsanordnung zum Schutz gegen Falschpolung vorzuschlagen, die weitgehend leistungslos arbeitet.

Diese Aufgabe wird mit der erfindungsgemäßen Schaltungsanordnung dadurch gelöst, daß in Reihe mit dem Verbraucher die Drain-Source-Strecke eines mit einer Substratdiode versehenen invers betriebenen Feldeffekttransistors geschaltet ist, wobei die Source-Elektrode mit dem Verbraucher verbunden ist, und daß die Gate-Elektrode an den von der Source-Elektrode abgewandten Anschluß des Verbrauchers angeschlossen ist.

Die erfindungsgemäße Schaltungsanordnung hat außer der leistungslosen Steuerung und dem geringen Spannungsabfall im Lastkreis den Vorteil, daß preiswerte in großen Stückzahlen hergestellte Feldeffekttransistoren mit einer Substratdiode verwendet werden können.

Eine Weiterbildung der Erfindung besteht darin, daß ein Kondensator an die Source-Elektrode und die Gate-Elektrode des Feldeffekttransistors angeschlossen ist.

Gemäß einer anderen Weiterbildung ist zum weiteren Schutz des Verbrauchers vorgesehen, daß dem Verbraucher eine Z-Diode parallelgeschaltet ist, die bei Betriebsspannungen unterhalb eines zulässigen Höchstwertes nichtleitend ist.

Schließlich besteht eine vorteilhafte Ausführungsform der Erfindung darin, daß der Verbraucher einerseits mit dem Pluspol einer Spannungsquelle und andererseits mit der Source-Elektrode eines n-Kanal-Feldeffekttransistors verbunden ist und daß die Gate-Elektrode mit dem Pluspol und die Drain-Elektrode an den Minuspol der Spannungsquelle angeschlossen ist. Dadurch ist eine Verwendung der preiswerteren n-Kanal-Feldeffekttransistoren möglich.

Die Erfindung läßt zahlreiche Ausführungsformen zu. Eine davon ist schematisch in der Zeichnung anhand mehrerer Figuren dargestellt und nachfolgend beschrieben. Es zeigt:

Fig. 1     ein erstes Ausführungsbeispiel und
Fig. 2     ein zweites Ausführungsbeispiel.

Gleiche Teile sind in den Figuren mit gleichen Bezugszeichen versehen.

Beide Schaltungsanordnungen weisen einen Verbraucher 1 auf, der direkt über einen Anschluß 2 mit dem positiven Pol einer nicht dargestellten Spannungsquelle verbunden ist und dessen weiterer Anschluß 3 über einen n-Kanal-Feldeffekttransistor 4 und über einen weiteren Anschluß 5 mit dem negativen Pol der Spannungsquelle verbunden ist. Der Feldeffekttransistor 4 wird invers betrieben, das heißt, im Falle des dargestellten n-Kanal-Feldeffekttransistors ist die Drain-Elektrode 6 mit negativem und die Source-Elektrode 7 mit positivem Potential verbunden.

Nach einem richtig gepolten Anschließen der dargestellten Schaltungsanordnung an die Spannungsquelle leitet der Feldeffekttransistor 4 zunächst nicht, da die Source-Elektrode 7 und die Gate-Elektrode 8 etwa auf gleichem Potential liegen. Die Stromleitung erfolgt jedoch über die Substratdiode 9, so daß der Verbraucher Spannung erhält. Durch den Spannungsabfall an der Substratdiode 9 wäre die Spannung am Verbraucher 1 allerdings um 1V niedriger als die Spannung zwischen den Anschlüssen 2 und 5 von beispielsweise 12V.

Sobald jedoch die Spannung an dem Verbraucher 1 größer als etwa 8V wird, beginnt der Feldeffekttransistor 4 zu leiten und übernimmt den Strom durch die Substratdiode 9 vollständig, da der Widerstand der Source-Drain-Strecke $R_{DSON}$ wesentlich kleiner als der Widerstand der Substratdiode 9 ist. Damit wird nur noch eine äußerst geringe Verlustleistung im Feldeffekttransistor 4 umgesetzt, der somit auch nicht gekühlt zu werden braucht.

Im Falle einer Falschpolung, was in den Figuren mit den in Klammern hinzugefügten Vorzeichen angedeutet ist, leitet die Substratdiode 9 nach der Verbindung mit der Spannungsquelle nicht. Dadurch verbleiben die Source-Elektrode 7 und die Gate-Elektrode 8 auf gleichem Potential, so daß auch kein Stromfluß durch den Feldeffekttransistor selbst zustandekommt.

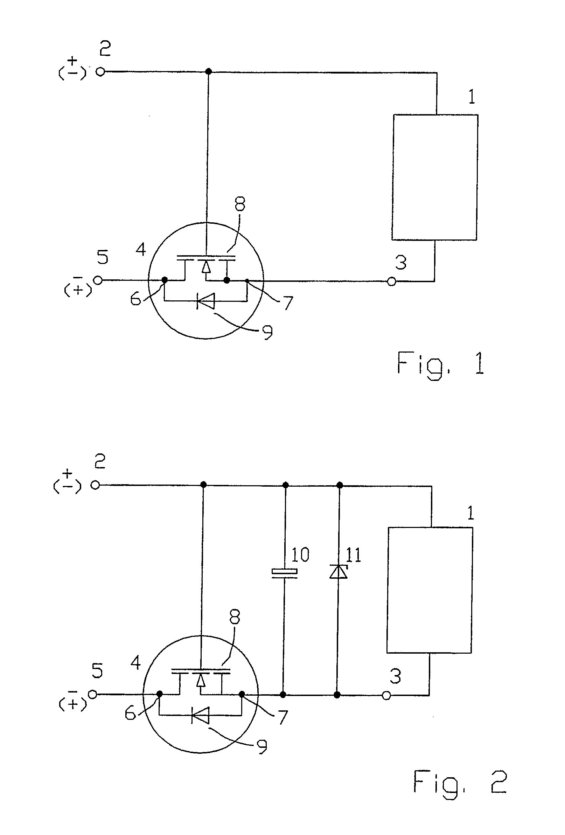

Gegenüber dem Ausführungsbeispiel nach Fig. 1 sind bei dem Ausführungsbeispiel nach Fig. 2 dem Verbraucher 1 ein Kondensator 10 und eine Z-Diode 11 in an sich bekannter Weise parallelgeschaltet. Die Z-Diode 11 und der Kondensator 10 schützen den Verbraucher zusätzlich vor zu hoher Betriebsspannung und vor Spannungsspitzen, wie sie beispielsweise durch Abschalten von induktiven Verbrauchern entstehen. Bei der erfindungsgemäßen Schaltungsanordnung wird durch den Kondensator 10 zusätzlich der Feldeffekttransistor 4 vor Spannungsspitzen zwischen Gate- und Source-Elektrode geschützt.

**Patentansprüche**

1. Schaltungsanordnung zum Schutz eines Verbrauchers in einem Gleichspannungsnetz gegen Falschpolung, dadurch gekennzeichnet, daß in Reihe mit dem Verbraucher (1) die Drain-Source-Strecke eines mit einer Substratdiode (9) versehenen invers betriebenen Feldeffekttransistors (4) geschaltet ist, wobei die Source-Elektrode (7) mit dem Verbraucher verbunden ist, und daß die Gate-Elektrode (8) an den von der Source-Elektrode (7) abgewandten Anschluß (2) des Verbrauchers (1) angeschlossen ist.

2. Schaltungsanordnung nach Anspruch 1, dadurch gekennzeichnet, daß ein Kondensator (10) an die Source-Elektrode und die Gate-Elektrode des Feldeffekttransistors (4) angeschlossen ist.

3. Schaltungsanordnung nach einem der Ansprüche 1 oder 2, dadurch gekennzeichnet, daß dem Verbraucher (1) eine Z-Diode (11) parallelgeschaltet ist, die bei Betriebsspannungen unterhalb eines zulässigen Höchstwertes nichtleitend ist.

4. Schaltungsanordnung nach einem der vorhergehenden Ansprüche, dadurch gekennzeichnet, daß der Verbraucher (1) einerseits mit dem Pluspol einer Spannungsquelle und andererseits mit der Source-Elektrode eines n-Kanal-Feldeffekttransistors (4) verbunden ist und daß die Gate-Elektrode mit dem Pluspol und die Drain-Elektrode an den Minuspol der Spannungsquelle angeschlossen ist.

Fig. 1

Fig. 2

4